# EUROPÄISCHE PATENTANMELDUNG

(11) **EP 3 736 146 A1**
(43) Veröffentlichungstag der Anmeldung: **11.11.2020**
(21) Anmeldenummer: 20173324.3
(22) Anmeldetag: 06.05.2020
(51) Int. Cl.: B60G 13/00, B60G 13/08, F04B 23/04, F04C 2/10, F04D 13/12

(54) **ENERGIEVERSORGUNGSEINHEIT FÜR AKTIVES FAHRWERKSYSTEM**

(30) Priorität: 08.05.2019 DE 102019111980
(71) Anmelder: RAPA Automotive GmbH & Co. KG, 95100 Selb (DE)
(72) Erfinder: Lauterbach, Frank, 95100 Selb (DE); Lehniger, Falk, 95100 Selb (DE); Kemnitz, Rocco, 95100 Selb (DE)
(74) Vertreter: Klunker IP Patentanwälte PartG mbB

(57) **Zusammenfassung**

Eine Vorrichtung (1) zum Bereitstellen von hydraulischer Energie in einem Fahrwerksystem eines Fahrzeugs, umfasst eine erste (10) und eine zweite (20) Motor-Pumpe-Einheit, die mechanisch fest miteinander verbunden sind, wobei die beiden Motor-Pumpe-Einheiten vorzugsweise baugleich ausgestaltet sind.

## Beschreibung

### GEBIET DER ERFINDUNG

Die vorliegende Erfindung betrifft eine Vorrichtung zum Bereitstellen von hydraulischer Energie in einem aktiven Fahrwerk eines Fahrzeugs, einen Bausatz für eine derartige Vorrichtung sowie ein Fahrwerksystem mit einer derartigen Vorrichtung.

### HINTERGRUND DER ERFINDUNG

Aktive Fahrwerksysteme sind prinzipiell bekannt, beispielsweise aus DE 39 02 743 C1 oder DE 2 020 292 A1. Ein aktives Fahrwerk weist hydraulisch steuerbare Stoßdämpfer auf, bei denen die beiden Zylinder- bzw. Dämpferkammern des Arbeitszylinders eines gegebenen Stoßdämpfers nicht lediglich über ein oder mehrere, gegebenenfalls steuerbare Dämpfungs- bzw. Drosselventile miteinander verbunden sind, sondern bei denen der Füllzustand der Zylinderkammern aktiv gesteuert werden kann und entsprechend bedarfsweise hydraulische Kräfte in das Fahrwerk eingeleitet werden können. Die beiden Zylinderkammern eines Stoßdämpfers können beispielsweise über eine hydraulische Pumpe miteinander verbunden sein.

Dadurch kann durch Pumpen von Hydraulikfluid beispielsweise Nick- und/oder Wankbewegungen des Fahrzeugs entgegengewirkt werden. Umgekehrt kann eine solche Anordnung aus Stoßdämpfer, hydraulischer Pumpe und Elektromotor prinzipiell auch dazu genutzt werden, durch Rekuperation gewonnene elektrische Energie in das Bordnetz des Fahrzeugs zurück zu speisen. Weiterhin können auch bei Verwendung der Pumpe unterschiedliche Dämpfungsverhalten eingestellt werden, beispielsweise "weich" oder "hart" oder dynamisch bzw. abhängig vom Fahrverhalten oder der Untergrundbeschaffenheit.

Zur Steuerung des Elektromotors einer gegebenen hydraulischen Pumpe ist dabei üblicherweise eine entsprechende Ansteuereinheit vorgesehen, wodurch ein sogenannte Motor-Pumpe-Einheit geschaffen wird. Es ist bekannt für jeden zu steuernden Stoßdämpfer genau eine Motor-Pumpe-Einheit vorzusehen. Dabei kann die entsprechende Motor-Pumpe-Einheit unmittelbar an oder zumindest nahe an dem jeweiligen Stoßdämpfer montiert sein. Aus Bauraumgründen ist dies jedoch nicht immer möglich, so dass die entsprechende Motor-Pumpe-Einheit ggf. entfernt vom Stoßdämpfer im Fahrzeug platziert werden muss. Dabei muss auf die korrekte hydraulische Verbindung und die korrekte elektrische Verkabelung geachtet werden.

### ZUSAMMENFASSUNG DER ERFINDUNG

Aufgabe der Erfindung ist es, eine Vorrichtung zum Bereitstellen von hydraulischer Energie, insbesondere in einem aktiven Fahrwerksystem eines Fahrzeugs zu schaffen, welche zwei Stoßdämpfer ansteuern kann und eine vereinfachte Montage gestattet. Es ist weiterhin Aufgabe der vorliegenden Erfindung einen entsprechenden Bausatz und ein entsprechendes Fahrwerksystem anzugeben.

Die Aufgabe wird gelöst durch einen Gegenstand mit den Merkmalen der unabhängigen Ansprüche. Bevorzugte Ausgestaltungen und Weiterbildungen sind in den abhängigen Ansprüchen angegeben.

Erfindungsgemäß wird eine Vorrichtung zum Bereitstellen von hydraulischer Energie in einem Fahrwerksystem eines Fahrzeugs bereitgestellt, umfassend eine erste Motor-Pumpe-Einheit und eine davon verschiedene zweite Motor-Pumpe-Einheit, die mechanisch miteinander fest bzw. lagefest verbunden sind, so dass diese bevorzugt eine vormontierbare bzw. vormontierte Einheit bilden. Die erfindungsgemäße Vorrichtung umfasst bevorzugt genau zwei Motor-Pumpe-Einheiten.

Dadurch bildet die erfindungsgemäße Vorrichtung eine kompakte, platzsparende mechanische Einheit, die zur Ansteuerung von zwei Stoßdämpfern eines Fahrwerksystems vorgesehen ist. Da die erfindungsgemäße Vorrichtung vormontierbar bzw. eine vormontierte Vorrichtung ist, reduziert sich der Montageaufwand beim Einbau in ein Fahrzeug bzw. Fahrwerksystem, im Vergleich zur Montage einzelner Motor-Pumpe-Einheiten. Insbesondere werden Montagezeit, Montageschritte, Befestigungspunkte und/oder Haltemittel eingespart, da die Motor-Pumpe-Einheiten für zwei Stoßdämpfer in einem Montageschritt und als ein Gesamtbauteil im Fahrwerksystem bzw. im Fahrzeug verbaut werden können.

Dabei sind die beiden Motor-Pumpe-Einheiten vorzugsweise baugleich, das heißt mit den gleichen Eigenschaften und Abmessungen bzw. identisch ausgestaltet.

Die mechanisch feste Verbindung der beiden Motor-Pumpe-Einheiten kann durch ein oder mehrere Verbindungsbauteile, bevorzugt über Verbindungsstangen oder Schrauben, besonders bevorzugt über genau drei, vier, sechs oder acht Verbindungsstangen oder Schrauben geschaffen werden, wobei in einer vorteilhaften Ausgestaltung die beiden Motor-Pumpe-Einheiten direkt aneinanderliegend angeordnet sind, das heißt einen Abstand gleich Null aufweisen. Ebenso kann die mechanisch feste Verbindung der beiden Motor-Pumpe-Einheiten auch über einen gemeinsamen Träger, auf dem die Motor-Pumpe-Einheiten fest montiert sind, geschaffen werden. Bevorzugt ist der Träger ein gemeinsames Gehäuse, in welchem die beiden Motor-Pumpe-Einheiten, vollständig oder teilweise, angeordnet sind. Dabei kann das gemeinsame Gehäuse abdichtend, beispielsweise spritzwasserdicht, ausgebildet sein. Das gemeinsame Gehäuse hat bevorzugt eine zylindrische oder quaderförmige Außenform.

In einer Ausgestaltung umfassen die Motor-Pumpe-Einheiten jeweils eine hydraulische Pumpe mit einem Pumpenanschluss zum hydraulischen Verbinden mit einem einer Motor-Pumpe-Einheit jeweils zugeordneten Stoßdämpfer eines Fahrwerksystems. Der Pumpenanschluss einer hydraulischen Pumpe umfasst jeweils insbesondere zwei Leitungsanschlüsse zum Anschließen von zwei Anschlussleitungen zum Verbinden mit zwei Druckkammern eines Stoßdämpfers. Die hydraulische Pumpe ist vorzugsweise eine Innenzahnradpumpe, wie sie beispielsweise aus DE 10 2014 103 958 A1 oder DE 10 2014 103 959 A1 bekannt ist. Der diesbezügliche Offenbarungsgehalt dieser Schriften wird in die vorliegende Schrift mit aufgenommen. Die Motor-Pumpe-Einheiten umfassen weiterhin jeweils einen Elektromotor zum Antreiben der hydraulischen Pumpe (oder umgekehrt), welcher bevorzugt als Elektromotorgenerator ausgebildet ist und dadurch einen Vierquadranten-Betrieb gestattet, der also auch einen Rekuperationsbetrieb gestattet, in welchem hydraulische Energie aus dem Stoßdämpfer in elektrische Energie gewandelt wird. Weiterhin umfassen die Motor-Pumpe-Einheiten jeweils eine Ansteuereinheit zum Steuern des Elektromotors bzw. Elektromotorgenerators, der im Folgenden der Einfachheit halber als Elektromotor bezeichnet wird. Dabei bilden die hydraulische Pumpe, der Elektromotor und die Ansteuereinheit bevorzugt eine kompakte bauliche Einheit, die beispielsweise ein durchgehendes, diese drei Untereinheiten umfassendes und beispielsweise abdichtendes Gehäuse aufweist. Die hydraulische Pumpe grenzt dabei unmittelbar an den Elektromotor. Ebenso grenzt bevorzugt die Ansteuereinheit unmittelbar an den Elektromotor.

Bevorzugt sind in den Motor-Pumpe-Einheiten jeweils die hydraulische Pumpe und der Elektromotor und besonders bevorzugt auch die Ansteuereinheit (bezüglich ihrer Symmetrieachsen und/oder Schwerpunkte) in einer Reihe bzw. entlang einer Längsrichtung der jeweiligen Motor-Pumpe-Einheit angeordnet. Die Längsrichtung der jeweiligen Motor-Pumpe-Einheit wird beispielsweise durch eine gerade Motorachswelle definiert, mit welcher der Elektromotor die hydraulische Pumpe antreibt (oder umgekehrt). Entsprechend sind die Ansteuereinheit und die Pumpe bevorzugt auf gegenüberliegenden Seiten des Elektromotors angeordnet, so dass der Elektromotor baulich zwischen Ansteuereinheit und Pumpe angeordnet ist. Alternativ kann die Ansteuereinheit bezüglich der Längsachse der Motor-Pumpe-Einheit auch seitlich bzw. radial am Elektromotor angeordnet sein. Insbesondere in dem Fall dass Pumpe, Elektromotor und Ansteuereinheit in einer Reihe entlang einer Längsrichtung angeordnet sind, ist die jeweils von der Motor-Pumpe-Einheit weg weisende Seite von Pumpe und/oder Ansteuereinheit als ebene Stirnfläche ausgebildet, die bevorzugt auch das jeweilige axiale Ende der Motor-Pumpe-Einheit bildet.

Bevorzugt weisen die Motor-Pumpe-Einheiten bzw. die dadurch geschaffenen baulichen Einheiten jeweils eine Gesamtlänge entlang der jeweiligen Längsachse im Bereich zwischen 15 und 40 cm auf, die bevorzugt 15, 20, 25, 30, 35 oder 40 cm beträgt, wobei jeder der genannten Werte auch eine Ober- oder Untergrenze des genannten Wertebereichs darstellen kann. Dies gestattet einen unkomplizierten Einbau in ein Fahrwerksystem.

Bevorzugt weisen die Motor-Pumpe-Einheiten oder zumindest deren hydraulische Pumpe und Elektromotor gemeinsam um die jeweilige Längsachse eine vollständig oder im Wesentlichen zylindrische Außenform bzw. ein (gemeinsames) Außengehäuse auf, mit einem Außendurchmesser oder maximalen Durchmesser im Bereich zwischen 60 und 150 mm, der bevorzugt 60, 70, 80, 90, 100, 110, 120, 130 oder 150 mm beträgt, wobei jeder der genannten Werte auch eine Ober- oder Untergrenze des genannten Wertebereichs darstellen kann. Das Außengehäuse ist dabei bevorzugt im Wesentlichen oder vollständig geschlossen und/oder abdichtend (beispielsweise spritzwasserdicht oder wasserdicht).

Bevorzugt liegt die maximale (Dauer-)Leistung des Elektromotors im Bereich zwischen 0,1 und 5 kW und beträgt beispielsweise 0,1, 0,2, 0,5, 1, 1,5, 2, 2,5, 3, 4 oder 5 kW, wobei jeder der genannten Werte auch eine Ober- oder Untergrenze des genannten Wertebereichs darstellen kann. Dabei liegt der Betriebsdruck im unbelasteten Zustand vorzugsweise zwischen 5 und 25 bar wobei im Betrieb Spitzenwerte von über 200 bar auftreten können. Dabei liegt die Fördermenge des Hydraulikfluids vorzugsweise im Bereich zwischen 15 und 30 l/min bei Druckdifferenzen an den beiden Leitungsanschlüssen des Pumpenanschlusses bis zu 30 bar. Insbesondere bei höheren Druckdifferenzen ist der Volumenstrom auch abhängig von der Leistung bzw. Baugröße der Motor-Pumpe-Einheit. Mit einem Elektromotor mit einer Leistung zwischen 3 und 5 kW bzw. einem Außendurchmesser im Bereich zwischen 90 und 120 mm beträgt der Volumenstrom typischerweise bis zu 10 l/min bei einer Druckdifferenz im Bereich zwischen 100 und 150 bar. Die Drehzahlen des Elektromotors und damit auch der hydraulischen Pumpe sind dabei proportional zum Volumenstrom. Die maximalen Drehzahlen liegen typischerweise im Bereich zwischen 5000 und 10.000 U/min.

Bevorzugt weisen die Motor-Pumpe-Einheiten bzw. deren jeweilige Ansteuereinheit jeweils genau einen Steueranschluss, beispielsweise für einen CAN-Bus, der auch einen Versorgungsspannungsanschluss beinhalten kann, und genau einen Leistungsanschluss, beispielsweise für 48V, welcher auch als Hochvoltanschluss für beispielsweise 400V oder 800V ausgeführt sein kann, auf. Entsprechend weist die erfindungsgemäße Vorrichtung insgesamt bevorzugt genau zwei Steueranschlüsse und genau zwei Leistungsanschlüsse auf.

Wie bereits erwähnt sind die Motor-Pumpe-Einheiten bevorzugt vierquadrantenfähig ausgebildet und weisen dazu als Elektromotor einen Elektromotorgenerator auf. Dies gestattet einen wechselweisen bzw. abwechselnden Betrieb als elektrischer Antrieb und/oder als elektrischer Generator, womit beispielsweise in Folge eines Druckstoßes an der Pumpe (beispielsweise in Folge eines mechanischen Stoßes auf einen Stoßdämpfer) hydraulische Energie über die Pumpe aus einem Fahrwerksystem als elektrische Energie zurückgewonnen und in ein Bordnetz gespeist werden kann. Für einen derartigen Wechselbetrieb ist der Einsatz einer Innenzahnradpumpe als hydraulische Pumpe besonders vorteilhaft, da diese eine geringe Massenträgheit und eine hohe Volumeneffizienz aufweist und somit einen hoch-dynamischen Wechselbetrieb mit minimaler Hysterese und minimalen Energieverlusten gestattet. Ein Wechsel zwischen Generator- und Motorbetrieb und umgekehrt ist dabei bevorzugt mit einer zeitlichen Auflösung bis zu 50 Hz möglich und auch die Ansteuereinheit ist dazu geeignet ausgebildet. Insbesondere sind die Motor-Pumpe-Einheiten bevorzugt geeignet zusammen mit dem Dämpfer sowohl im Bereich der Fahrzeugaufbaufrequenz, bis zu 5 Hz, als auch im Bereich der Radfrequenz, bis zu 15 Hz, zu operieren.

In einer bevorzugten Ausgestaltung liegen die Längsachsen beider Motor-Pumpe-Einheiten auf einer gemeinsamen Achse, die eine Längsachse bzw. gemeinsame Längsachse der Vorrichtung definieren, was im Folgenden als axiale Anordnung der Motor-Pumpe-Einheiten beschrieben ist. Dabei sind die hydraulischen Pumpen, und vorzugsweise auch die Pumpenanschlüsse, jeweils auf voneinander weg weisenden Seiten der jeweiligen Motor-Pumpe-Einheiten angeordnet, so dass zwischen den Pumpen der jeweiligen Motor-Pumpe-Einheiten die jeweiligen Elektromotoren und gegebenenfalls. auch die jeweiligen Ansteuereinheiten angeordnet sind. Entsprechend weist die erfindungsgemäße Vorrichtung vorliegend einen längsgestreckten Aufbau auf mit einer Gesamtlänge (gemessen beispielsweise zwischen den Pumpenanschlüssen und/oder Pumpenendflächen bzw. Stirnflächen der beiden Pumpen) entlang der gemeinsamen Längsachse im Bereich zwischen 20 und 90 cm, die beispielsweise 20, 30, 40, 50, 59, 60, 70, 80 oder 90 cm beträgt, wobei jeder der genannten Werte auch eine Ober- oder Untergrenze des genannten Wertebereichs darstellen kann. Entsprechend weisen die beiden Motor-Pumpe-Einheiten bzw. die sich gegenüberliegenden, von der jeweiligen Pumpenseite abgewandten Enden, die beispielsweise als ebene Stirnfläche ausgebildet sind, einen Abstand entlang der gemeinsamen Längsachse von 0 bis 10 cm auf, der beispielsweise 0, 1, 2, 3, 5, 7 oder 10 cm beträgt, wobei jeder der genannten Werte auch eine Ober- oder Untergrenze des genannten Wertebereichs darstellen kann. Im einfachsten Fall liegen die Motor-Pumpe-Einheiten direkt aneinander an. Es kann jedoch vorteilhaft sein zur Kühlung der Ansteuereinheiten oder Elektromotoren oder zur Verringerung des Abstands zu den Stoßdämpfern einen von Null verschiedenen Abstand der Motor-Pumpe-Einheiten vorzusehen. Bei einer derartigen axialen Anordnung kann ein Abstand zwischen Pumpe und jeweiligem Stoßdämpfer minimiert werden.

In einer alternativen, bevorzugten Ausgestaltung liegen die Längsachsen der beiden Motor-Pumpe-Einheiten parallel zueinander (und fallen nicht zusammen) und/oder die Motor-Pumpe-Einheiten bzw. deren Längsachsen sind parallel oder anti-parallel ausgerichtet, bevorzugt derart, dass die beiden Motor-Pumpe-Einheiten in Richtung der Längsachsen versetzt oder besonders bevorzugt bündig angeordnet sind. Bei paralleler Ausrichtung der Motor-Pumpe-Einheiten liegen entsprechend die pumpenseitigen Enden der beiden Motor-Pumpe-Einheiten in einer gemeinsamen Ebene, die senkrecht auf den Längsachsen der Motor-Pumpe-Einheiten steht, und die ansteuereinheit- oder elektromotorseitigen Enden der beiden Motor-Pumpe-Einheiten liegen in einer weiteren gemeinsamen Ebene, die ebenfalls senkrecht auf den Längsachen der Motor-Pumpe-Einheiten steht. Bei anti-paralleler Ausrichtung der Motor-Pumpe-Einheiten liegt entsprechend das pumpenseitige Ende einer der beiden Motor-Pumpe-Einheiten in einer gemeinsamen, senkrecht auf den Längsachsen der Motor-Pumpe-Einheiten stehenden Ebene mit dem ansteuereinheit- oder elektromotorseitigen Ende der jeweils anderen Motor-Pumpe-Einheit.

Ein erfindungsgemäßer Bausatz zum Bereitstellen einer wie oben beschriebenen Vorrichtung zum Bereitstellen von hydraulischer Energie, insbesondere in einem Fahrwerksystem eines Fahrzeugs, umfasst die erste (10) und zweite (20) Motor-Pumpe-Einheit sowie ein oder mehrere Verbindungsbauteile und/oder einen gemeinsamen Träger für die beiden Motor-Pumpe-Einheiten zum Verbinden der beiden Motor-Pumpe-Einheiten, wobei bevorzugt die Verbindungsbauteile und/oder der Träger eine wie oben beschriebene räumliche Anordnung der Motor-Pumpe-Einheiten relativ zueinander vorgibt. Alternativ oder zusätzlich umfasst der Bausatz auch ein wie zuvor beschriebenes Gehäuse, das bevorzugt ein gemeinsames Gehäuse für beide Motor-Pumpe-Einheiten bildet.

Ein erfindungsgemäßes Fahrwerksystem für ein Fahrzeug umfasst zumindest einen ersten und zweiten hydraulisch steuerbaren Stoßdämpfer mit jeweils zwei beispielsweise durch einen beweglichen Dämpferkolben getrennten Dämpfer- bzw. Druckkammern, welche bevorzugt einer gemeinsamen Fahrwerkachse zugeordnet oder an dieser angeordnet sind, sowie eine wie oben beschriebene Vorrichtung zum Bereitstellen von hydraulischer Energie in einem Fahrwerksystem eines Fahrzeugs, wobei die erste Motor-Pumpe-Einheit die Druckkammern des ersten Stoßdämpfers hydraulisch miteinander verbindet und die zweite Motor-Pumpe-Einheit die Druckkammern des zweiten Stoßdämpfers hydraulisch miteinander verbindet. Dadurch kann beispielsweise eine "weiche" oder "harte" Dämpfung eingestellt werden, indem beispielsweise Druckstöße aus den Kammern durch die jeweilige Motor-Pumpe-Einheit mehr oder weniger gedämpft bzw. gedrosselt werden. In diesem Fall wird somit die jeweilige Motor-Pumpe-Einheit hydraulisch angetrieben, so dass der Elektromotor als Elektromotorgenerator betrieben werden kann und somit elektrische Energie rückgewonnen werden kann (Rekuperation). Weiterhin kann auch die Null- bzw. Ruhelage des Stoßdämpfers aktiv bzw. gezielt eingestellt werden und auch während des Fahrbetriebs verändert werden (aktives Fahrwerk). Es versteht sich, dass das Fahrwerksystem eine oder mehrere weitere Achsen aufweisen kann, die jeweils mit einer weiteren erfindungsgemäßen Vorrichtung zur Steuerung der entsprechenden Stoßdämpfer ausgestattet sein können.

Bevorzugt liegt in dem erfindungsgemäßen Fahrwerksystem die Länge der Hydraulikleitungen zwischen einer Motor-Pumpe-Einheit bzw. deren Pumpe und dem Stoßdämpfer im Bereich zwischen 10 und 150 cm, die beispielsweise 10, 20, 30, 40, 50, 60, 70, 80, 90, 100, 120 oder 150 cm beträgt, wobei jeder der genannten Werte auch eine Ober- oder Untergrenze des genannten Wertebereichs darstellen kann.

### KURZBESCHREIBUNG DER ZEICHNUNGEN

Die Erfindung wird im Folgenden mit Bezug auf die beiliegenden Zeichnungen beschrieben. Die Zeichnungen sind lediglich schematische Darstellungen und die Erfindung ist nicht auf die speziellen dargestellten Ausführungsbeispiele beschränkt.
Fig. 1 zeigt eine perspektivische Ansicht eines ersten Ausführungsbeispiels der erfindungsgemäßen Vorrichtung.
Fig. 2 zeigt eine schematische Ansicht eines Fahrwerksystems mit einer erfindungsgemäßen Vorrichtung gemäß dem ersten Ausführungsbeispiel.
Fig. 3 zeigt eine schematische Ansicht eines zweiten Ausführungsbeispiels der erfindungsgemäßen Vorrichtung.
Fig. 4 zeigt eine schematische Ansicht eines dritten Ausführungsbeispiels der erfindungsgemäßen Vorrichtung.

### DETAILLIERTE BESCHREIBUNG

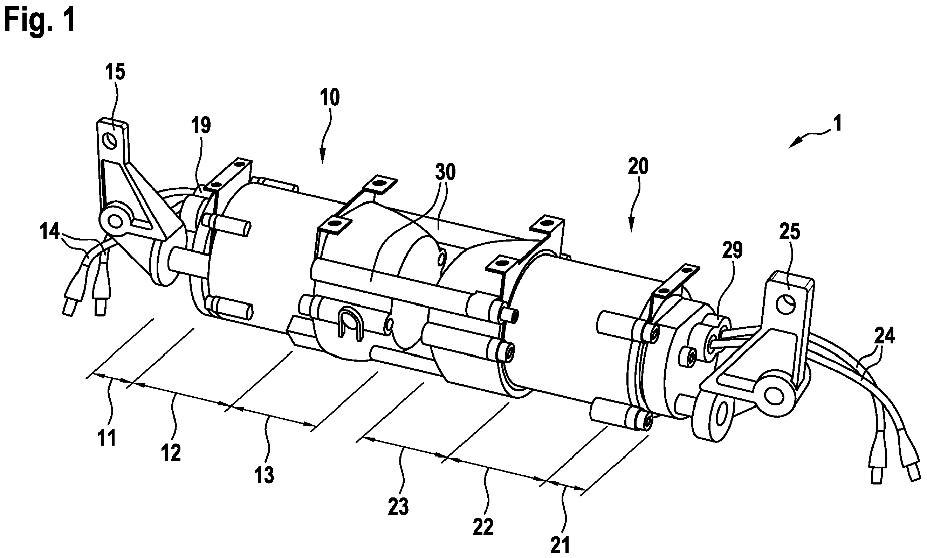

Fig. 1 zeigt eine perspektivische Ansicht eines ersten Ausführungsbeispiels einer Vorrichtung 1 zum Bereitstellen von hydraulischer Energie in einem aktiven Fahrwerksystem 2 eines Fahrzeugs. Die Vorrichtung umfasst eine erste 10 und eine zweite 20 Motor-Pumpe-Einheit, die baugleich bzw. identisch ausgestaltet sind und jeweils eine hydraulische Innenzahnradpumpe 11, 21, einen Elektromotor bzw. Elektromotorgenerator 12, 22 sowie eine elektronische Ansteuereinheit 13, 23 (ECU, Electronic Control Unit) umfassen. Jede der Motor-Pumpe-Einheiten 10, 20 bildet eine bauliche Einheit mit einer/m durchgehend geschlossenen, spritzwasserdichten Außenhülle bzw. Außengehäuse, in welcher jeweils die Pumpe 11, 21, der Elektromotor 12, 22 und die Ansteuereinheit 13, 23 entlang einer Längsrichtung der jeweiligen Motor-Pumpe-Einheit 10, 20 in einer Reihe angeordnet sind, so dass der Elektromotor 12, 22 jeweils zwischen Pumpe 11, 21 und Ansteuereinheit 13, 23 angeordnet ist. Dabei ist die Längsrichtung einer Motor-Pumpe-Einheit 10, 20 jeweils durch eine nicht dargestellte, innenliegende, gerade Motorachswelle definiert, mit welcher der Elektromotor 12, 22 die jeweilige Pumpe 11, 21 antreibt. Die Pumpen 11, 21 weisen jeweils einen Pumpenanschluss 19, 29 mit zwei Leitungsanschlüssen auf, in welche in den vorliegenden Ausführungsbeispielen jeweils zwei Anschlussleitungen 14, 24 eingebracht sind, die zum Anschließen an die jeweils zwei Druckkammern eines Stoßdämpfers 16, 26 eines aktiven Fahrwerksystems 2 vorgesehen sind.

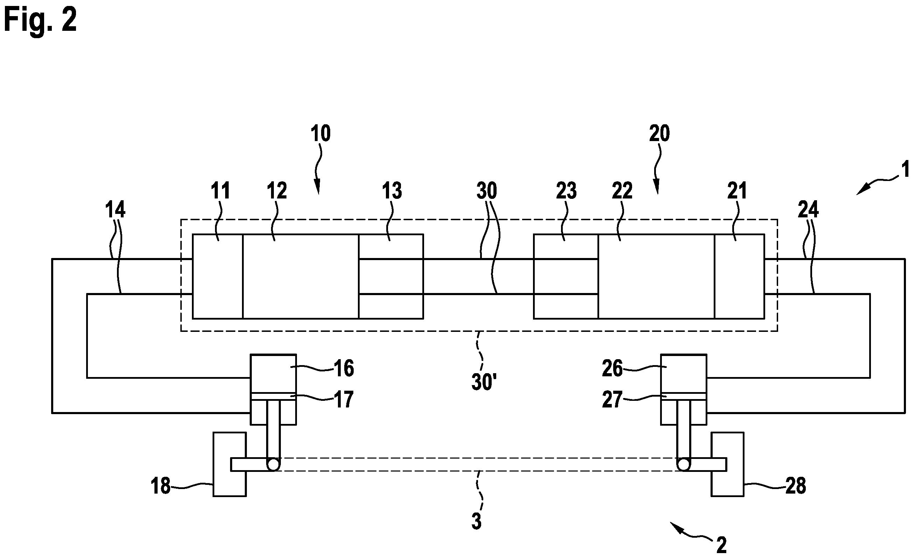

Die beiden Motor-Pumpe-Einheiten 10, 20 sind in dem ersten Ausführungsbeispiel in einer axialen Anordnung angeordnet, dass heißt deren jeweilige Längsachsen fallen zusammen und definieren die gemeinsame Längsachse der erfindungsgemäßen Vorrichtung 1. Die beiden Motor-Pumpe-Einheiten 10, 20 sind in dem ersten Ausführungsbeispiel mittel vier Verbindungsstangen 30 fest miteinander verbunden. Alternativ kann zur Ausbildung der erfindungsgemäßen Vorrichtung anstelle der Verbindungsstangen 30 auch ein in Fig. 2 schematisch dargestellter Träger 30' beispielsweise in Form eines gemeinsamen Gehäuses vorgesehen sein. In dem dargestellten Ausführungsbeispiel sind weiterhin Aufnahmen 15, 25 zum Anbringen der erfindungsgemäßen Vorrichtung in einem Fahrzeug, beispielsweise in der Nähe oder an einer Fahrzeug- bzw. Fahrwerkachse 3 vorgesehen.

In dem ersten Ausführungsbeispiel weist die erfindungsgemäße Vorrichtung 1 eine Gesamtlänge von einem Pumpenanschluss 19 zum gegenüberliegenden Pumpenanschluss 29 von 59 cm entlang der gemeinsamen Längsachse auf sowie eine, abgesehen von Befestigungsmitteln, im Wesentlichen zylindrische Außenform mit einem Durchmesser von ca. 120 mm. Weiterhin liegen sich die Ansteuereinheiten 13, 23 der beiden Motor-Pumpe-Einheiten 10, 20 gegenüber und weisen jeweils eine ebene, zu den Längsachsen senkrechte Stirnfläche auf, die ca. 30 mm voneinander beabstandet sind. Dabei liegt die Längsachse der erfindungsgemäßen Vorrichtung 1 mit Vorteil parallel zu der Fahrwerkachse 3 bzw. zu einer Verbindungslinie der einer Fahrwerkachse zugeordneten Räder 18, 28. Dadurch wird zum einen der Abstand der Pumpenanschlüsse 19, 29 zu den jeweiligen Stoßdämpfern verringert und zum anderen eine ausreichende Kühlung der sich gegenüberliegenden Ansteuereinheiten 13, 23 gewährleistet.

In Fig. 2 ist ein Fahrwerksystem 2 mit einer erfindungsgemäßen Vorrichtung 1 gemäß dem ersten Ausführungsbeispiel schematisch dargestellt. Darin sind die jeweils von den Pumpen 11, 21 ausgehenden jeweils zwei hydraulischen Leitungen 14, 24 mit den beiden Druckkammern jeweils eines Stoßdämpfers 16, 26 verbunden, welche im einfachsten Fall durch einen in einem Dämpferzylinder axial verfahrbaren Kolben 17, 27 getrennt sind. In dem dargestellten Ausführungsbeispiel sind die Zylinder der Stoßdämpfer 16, 26 mit der gefederten Masse des Fahrzeugs bzw. der Karosserie verbunden, während der Kolben 17, 27 mit der ungefederten Masse des Fahrzeugs bzw. einem Rad 18, 28 und gegebenenfalls, soweit vorhanden, auch mit einer Fahrwerkachse 3 verbunden bzw. gekoppelt ist. Dies kann jedoch auch umgekehrt ausgestaltet sein. Weiterhin wurde in der schematischen Darstellung von Fig. 2 auf üblicherweise zusätzlich vorgesehene Federelemente, beispielsweise ein Luft- und/oder Stahlfederelement, verzichtet.

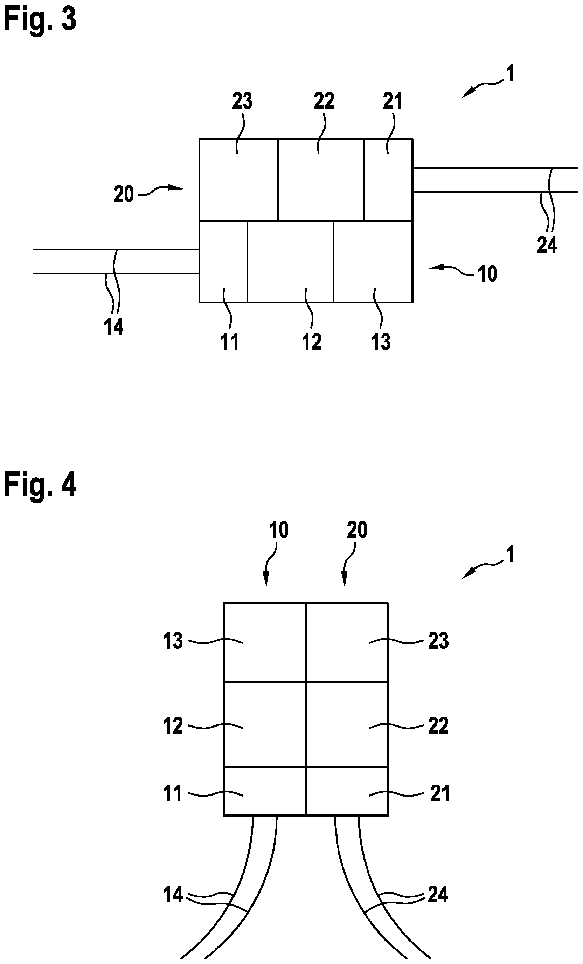

Fig. 3 zeigt eine schematische Ansicht eines zweiten Ausführungsbeispiels der erfindungsgemäßen Vorrichtung 1, in welchem die Längsachsen beider Motor-Pumpe-Einheiten 10, 20 parallel liegen, im Gegensatz zum ersten Ausführungsbeispiel jedoch nicht zusammenfallen. Die beiden Motor-Pumpe-Einheiten 10, 20 sind dabei bündig und anti-parallel angeordnet, das heißt die Pumpen 11, 21 weisen zu gegenüberliegenden, voneinander weg weisenden Seiten. Mit Vorteil kann die erfindungsgemäße Vorrichtung 1 gemäß des zweiten Ausführungsbeispiels derart im Fahrzeug bzw. Fahrwerksystem 2 angeordnet werden, dass die zueinander parallelen Längsachsen der beiden Motor-Pumpe-Einheiten 10, 20 auch parallel zu der Fahrwerkachse 3 liegen. Im Vergleich mit dem ersten Ausführungsbeispiel ist dabei jedoch die Gesamtlänge der erfindungsgemäßen Vorrichtung 1 entlang der Längsachse verringert, im Wesentlichen auf die Länge einer Motor-Pumpe-Einheit 10, 20 und somit halbiert, womit gegebenenfalls ein im Fahrzeug vorhandener Bauraum besser ausgenutzt werden kann.

Fig. 4 zeigt eine schematische Ansicht eines dritten Ausführungsbeispiels der erfindungsgemäßen Vorrichtung 1, in welchem
die Längsachsen beider Motor-Pumpe-Einheiten 10, 20 wiederum parallel liegen und nicht zusammenfallen. Die beiden Motor-Pumpe-Einheiten 10, 20 sind dabei auch bündig aber parallel ausgerichtet. Entsprechend sind die pumpenseitigen Enden der beiden Motor-Pumpe-Einheiten 10, 20 in einer ersten Ebene angeordnet, die senkrecht auf den Längsachsen der beiden Motor-Pumpe-Einheiten 10, 20 steht, während die ansteuereinheitseitigen Enden der Motor-Pumpe-Einheiten 10, 20 in einer weiteren gemeinsamen Ebene angeordnet sind, die ebenfalls senkrecht auf den Längsrichtungen der Motor-Pumpe-Einheiten 10, 20 steht. Dabei sind die Längsachsen der beiden Motor-Pumpe-Einheiten 10, 20 mit Vorteil senkrecht zu einer Fahrwerkachse 3 ausgerichtet.

## Patentansprüche

1. Vorrichtung (1) zum Bereitstellen von hydraulischer Energie, insbesondere in einem Fahrwerksystem (2) eines Fahrzeugs, umfassend:
eine erste (10) und eine zweite (20) Motor-Pumpe-Einheit, die mechanisch fest miteinander verbunden sind, wobei die beiden Motor-Pumpe-Einheiten vorzugsweise baugleich ausgestaltet sind.

2. Vorrichtung nach Anspruch 1, wobei die Motor-Pumpe-Einheiten (10, 20) jeweils eine hydraulische Pumpe (11, 21) mit einem Pumpenanschluss, insbesondere eine Innenzahnradpumpe, einen Elektromotor (12, 22) zum Antreiben der hydraulischen Pumpe sowie eine Ansteuereinheit (13, 23) zum Steuern des Elektromotors umfassen, die bevorzugt eine bauliche Einheit bilden.

3. Vorrichtung (1) nach Anspruch 1 oder 2, wobei in den Motor-Pumpe-Einheiten (10, 20) jeweils die hydraulische Pumpe (11, 21) und der Elektromotor (12, 22) und bevorzugt auch die Ansteuereinheit (13, 23) in einer Reihe bzw. entlang einer Längsrichtung bzw. Längsachse der Motor-Pumpe-Einheit angeordnet sind, welche bevorzugt durch eine Motorachswelle des Elektromotors definiert wird.

4. Vorrichtung (1) nach einem der vorhergehenden Ansprüche, wobei die Motor-Pumpe-Einheiten (10, 20) jeweils eine Gesamtlänge im Bereich zwischen 15 und 40 cm aufweisen.

5. Vorrichtung (1) nach einem der vorhergehenden Ansprüche, wobei die Motor-Pumpe-Einheiten (10, 20) oder zumindest deren hydraulische Pumpe (11, 21) und Elektromotor (12, 22) gemeinsam ein(e) vollständig oder im Wesentlichen zylindrische(s) Außenform bzw. Gehäuse, bevorzugt mit einem Durchmesser im Bereich zwischen 60 und 150 mm, aufweisen.

6. Vorrichtung (1) nach einem der vorhergehenden Ansprüche, wobei die Leistung des Elektromotors (13, 23) der Motor-Pumpe-Einheiten (10, 20) im Bereich zwischen 0,1 und 5 kW liegt.

7. Vorrichtung (1) nach einem der vorhergehenden Ansprüche, wobei die Motor-Pumpe-Einheiten (10, 20) jeweils einen Steueranschluss und einen Leistungsanschluss, insbesondere einen Hochvoltanschluss, aufweisen.

8. Vorrichtung (1) nach einem der vorhergehenden Ansprüche, wobei die Motor-Pumpe-Einheiten (10, 20) vierquadrantenfähig sind und/oder in den Motor-Pumpe-Einheiten jeweils der Elektromotor (12, 22) als Elektromotorgenerator ausgebildet ist.

9. Vorrichtung nach einem der Ansprüche 1 bis 8, **dadurch gekennzeichnet, dass** die Längsachsen beider Motor-Pumpe-Einheiten (10, 20) auf einer gemeinsamen Achse liegen, die eine Längsachse der Vorrichtung bilden und/oder die hydraulischen Pumpen jeweils voneinander weg weisen.

10. Vorrichtung (1) nach Anspruch 9, **dadurch gekennzeichnet, dass** die beiden Motor-Pumpe-Einheiten (10, 20) einen Abstand von 0 bis 10 cm aufweisen.

11. Vorrichtung (1) nach Anspruch 9 oder 10, **dadurch gekennzeichnet, dass** die Vorrichtung eine Gesamtlänge im Bereich zwischen 20 und 90 cm aufweist.

12. Vorrichtung (1) nach einem der Ansprüche 1 bis 8, **dadurch gekennzeichnet, dass** die Längsachsen beider Motor-Pumpe-Einheiten (10, 20) parallel liegen und/oder die Motor-Pumpe-Einheiten parallel oder anti-parallel ausgerichtet sind, bevorzugt derart, dass die beiden Motor-Pumpe-Einheiten versetzt oder bündig angeordnet sind.

13. Vorrichtung (1) nach einem der vorhergehenden Ansprüche, **dadurch gekennzeichnet, dass** die mechanisch feste Verbindung der Motor-Pumpe-Einheiten (10, 20) über ein oder mehrere Verbindungsbauteile, bevorzugt Verbindungsstangen (30) oder Schrauben, besonders bevorzugt drei, vier, sechs oder acht Verbindungsstangen oder Schrauben, oder über einen gemeinsamen Träger (30'), bevorzugt ein gemeinsames Gehäuse, besonders bevorzugt ein abdichtendes Gehäuse geschaffen wird.

14. Bausatz zum Bereitstellen der Vorrichtung (1) nach einem der Ansprüche 1 bis 13, umfassend die erste (10) und zweite (20) Motor-Pumpe-Einheit sowie ein oder mehrere Verbindungsbauteile (30) oder einen Träger (30') zum Verbinden der beiden Motor-Pumpe-Einheiten und/oder ein Gehäuse.

15. Fahrwerksystem (2) für ein Fahrzeug, umfassend zumindest einen ersten und zweiten hydraulisch steuerbaren Stoßdämpfer (16, 26), welche bevorzugt einer gemeinsamen Fahrwerkachse (3) zugeordnet oder an einer gemeinsamen Fahrwerkachse (3) angeordnet sind, sowie eine Vorrichtung (1) nach einem der Ansprüche 1 bis 14, wobei die erste Motor-Pumpe-Einheit (10) Druckkammern des ersten Stoßdämpfers (16) hydraulisch verbindet und die zweite Motor-Pumpe-Einheit (20) Druckkammern des zweiten Stoßdämpfers (26) hydraulisch verbindet und bevorzugt die Vorrichtung an der Fahrwerkachse (3) angeordnet ist.
